Europäisches Patentamt

European Patent Office

Office européen des brevets

(11) Veröffentlichungsnummer: **0 540 838 B1**

(12) **EUROPÄISCHE PATENTSCHRIFT**

(45) Veröffentlichungstag der Patentschrift: **13.12.95**

(51) Int. Cl.⁶: **D21H 17/48**, B01D 39/14, C08L 63/02

(21) Anmeldenummer: **92113949.9**

(22) Anmeldetag: **17.08.92**

(54) **Bindemittelsysteme auf Basis von Epoxydharz-Phenolharz-Kombinationen**

(30) Priorität: **08.11.91 DE 4136764**

(43) Veröffentlichungstag der Anmeldung:
**12.05.93 Patentblatt 93/19**

(45) Bekanntmachung des Hinweises auf die Patenterteilung:
**13.12.95 Patentblatt 95/50**

(84) Benannte Vertragsstaaten:
**AT BE CH DE DK ES FR GB GR IT LI LU NL PT SE**

(56) Entgegenhaltungen:
**EP-A- 0 196 476**
**EP-A- 0 199 606**
**WO-A-91/19755**
**GB-A- 1 238 255**
**US-A- 4 278 733**

(73) Patentinhaber: **RÜTGERSWERKE AKTIENGE-SELLSCHAFT**
**Mainzer Landstrasse 217**
**D-60326 Frankfurt (DE)**

(72) Erfinder: **Duda, Horst**
**Vor dem Hopey 2**
**W-5860 Iserlohn-Letmathe (DE)**
Erfinder: **Reisel, Winfried**
**Im Nordfeld 62**
**W-5860 Iserlohn-Letmathe (DE)**
Erfinder: **Adolphs, Peter, Dr.**
**Tellenkamp 2**
**W-5750 Menden 1 (DE)**

**Beschreibung**

Die Erfindung betrifft ein Harzgemisch als Bindemittel mit niedrigem Gehalt an Monomeren und niedermolekularen Verbindungen zur Herstellung von Filtern für Fest/Flüssig-Trennungen und zur Luftfiltration zur Verstärkung von Glasgewebeeinlagen zur Herstellung von Trenn- und Schruppscheiben, Reibbelägen, technischen und dekorativen Laminaten, Glasgewebeverstärkungen und Einbrennlacken.

Da Phenolharze gute Thermostabilitäten und Chemikalienfestigkeiten aufweisen, haben sie sich im Laufe der Zeit auf vielen Anwendungsgebieten durchsetzen können, so auch zur Herstellung harzgetränkter Filterpapiere. Diese werden üblicherweise aus voluminösen, weichen saugfähigen Papieren, deren Porenvolumen 80 % und mehr beträgt, hergestellt. Im Rohzustand nehmen solche Papiere begierig Wasser auf und verlieren dabei einen großen Teil ihrer ohnehin nicht hohen Festigkeit.

Darüberhinaus quellen die enthaltenen Cellulosefasern und verringern dadurch das Porenvolumen. Durch Tränken mit geeigneten Imprägnierharzen wird den Filterpapieren daher Festigkeit und eine höhere Stabilität gegen Feuchtigkeit verliehen.

Gewöhnlich verwendet man zu diesem Zweck hauptsächlich Phenolharze auf der Basis von Phenolnovolak-Hexamethylentetramin oder von Phenolresolen bzw. Mischungen dieser Harze, die in gelöster Form vorliegen. Als Verdünnungsmittel können dabei Alkohole, Ketone, Ester oder deren Mischungen dienen. Gut für diesen Zweck sind z. B. Methanol oder Ethanol geeignet.

Da die imprägnierten Filter im Gebrauch z. B. als Luft- oder Ölfilter eine gewisse Flexibilität besitzen müssen, wurde bisher die Herstellung derart durchgeführt, daß im einsetzbaren Filter ein gewisser Anteil niedermolekularer Verbindungen insbesondere freies Phenol, enthalten blieb.

In neuerer Zeit hat sich jedoch dieser Gehalt an restlichem Phenol und niedermolekuaren Bestandteilen als Nachteil erwiesen, da für die Verwendung derartiger Flächengebilde die Geruchsintensität durch Monomere und niedermolekulare Verbindungen bei der Lagerung, Konfektionierung und im Gebrauch Bedeutung erlangt haben, wobei die Form der Entsorgung auf normalen Deponien oder als Sondermüll ein weiteres wichtiges Einsatzkriterium darstellt. Bei der Aushärtung phenolharz-imprägnierter Filter werden zudem geruchsintensive Spaltprodukte freigesetzt, wodurch eine zusätzliche Abluftreinigung erforderlich wird.

Es ist weiterhin üblich, mit Hilfe von ähnlichen Harzkombinationen in geringerer Verdünnung Glasgewebeprepregs zur Schleifscheibenverstärkung herzustellen. Um hohe Schleifgeschwindigkeiten und damit hohe Schleifleistungen mit solchen phenolharzgebundenen Schleifkörpern zu erzielen, ist zur Erfüllung der Arbeitssicherheitsanforderungen eine Verstärkung der Schleifkörper erforderlich. Diese Verstärkung kann mit unterschiedlichen Materialien wie z. B. Faserstoffen, Vliesen sowie gewebten Textilstoffen auf Basis Baumwolle, Glas, Kunstseide oder Aramid erfolgen. Prepregs unter Verwendung von Glasseidegeweben und Phenolharzen haben die größte industrielle Anwendung erfahren, da sie die besonders hohen mechanischen und thermischen Festigkeitsanforderungen an den Träger noch am besten erfüllen.

Dabei ist das auf das Gewebe aufgebrachte Bindemittel ein wichtiger Bestandteil der Verstärkung. Es soll eine gute Benetzungsfähigkeit und Haftung gegenüber dem Glasfilament und der Schleifscheibenmischung aufweisen, um seiner Funktion als zusätzlicher Haftvermittler bzw. Kraftüberträger zwischen Schleifscheibenbindung und Armierung gerecht zu werden.

Das Phenolharz, welches zur Imprägnierung eingesetzt wird, muß eine starke Adhäsion zum Gewebe haben, hohe Festigkeiten und eine gewisse Flexibilität auf dem Gewebe aufweisen. Seine Härtezeit muß auf die Reaktivität der anderen Harze, die zur Herstellung von Schleifscheiben eingesetzt werden, abgestimmt sein. Weiterhin darf nach der Imprägnierung und anschließenden Trocknung die sogenannte "Fensterbildung", eine flächige Ausbreitung des Harzfilms zwischen den Gewebemaschen, nicht auftreten, um eine einwandfreie Kornverteilung der Scheibenmischung zu gewährleisten. Der Prepreg sollte unter Beibehaltung der Klebfreiheit und Elastizität eine relativ lange Lagerfähigkeit, auch unter ungünstigen klimatischen Bedingungen, aufweisen, um einwandfreie Schnittkanten beim Stanzen der Rondelle ohne Abplatzen von Harzteilen zu gewährleisten. Klebfreie Prepregs ohne Trennfolienzwischeneinlage ermöglichen eine rationelle Verarbeitung an Fertigungsautomaten.

Während in früheren Jahren hierzu vornehmlich Phenolresole zur Imprägnierung Verwendung fanden, wurden später, ebenso wie zur Imprägnierung von Papierfiltern, auch höherkondensierte Phenolnovolaklösungen, denen man Hexamethylentetramin als Härter zugesetzt hatte, eingesetzt.

Prepregs auf Basis von Phenolnovolaken wiesen eine längere Lagerfähigkeit hinsichtlich des Fließgrades des Harzes auf, blieben unter ungünstigen klimatischen Verhältnissen klebfrei und waren wirtschaftlicher herzustellen als Prepregs auf Basis von Phenolresolen. Als Nachteil ist die mehr oder weniger anfallende Sprödigkeit des Harzes im Prepreg zu bewerten, die auf eine geringere Haftung zum Gewebe zurückzuführen ist.

Daher wurde auch für diese Verwendung in den letzten Jahren versucht, die Vorteile beider Harztypen durch Mischen miteinander zu verbinden, was aber nur bis zu einem gewissen Grad gelang.

So konnte dadurch die Umweltverträglichkeit der imprägnierten Produkte nicht in großem Maße erhöht werden, da die erwünschte Flexibilität dieser Produkte nur durch einen gewissen Gehalt an niedermolekularen Verbindungen und an Monomeren erhalten werden kann.

Aus WO 91/19755 ist ein Harzgemisch aus Epoxidharz und Novolak bekannt, das zur Herstellung von Prepregs für Elektrolaminate verwendet wird. Abgesehen davon, daß das Harzgemisch eine zu hohe Viskosität hat, ist seine Reaktivität nicht zufriedenstellend und die Flexibilität für die Anwendung zur Imprägnierung von Filtern oder Schleifscheibenverstärkungen nicht ausreichend.

GB-A 1 238 255 beschreibt ein Bindemittelgemisch aus Epoxidharz und Phenolresol, das zur Imprägnierung von Filterpapieren verwendet wird. auch diese Gemische sind nach dem Aushärten steif und spröde.

US-A 4,278,733 offenbart ein Laminat, das als Bindemittel ein Gemisch aus einem Epoxidharz und einem Co-Kondensationsprodukt von Anilin, Phenol und Formaldehyd enthält. Die Reaktivität dieses Bindemittelgemisches ist allerdings nicht zufriedenstellend, ebenso wie die des aus EP-A 0 199 606 bekannten Bindemittelgemisches aus Epoxidharz und Kondensationsprodukten aus speziellen Bisphenolen.

Aufgabe der Erfindung war es daher, ein preiswertes, lagerfähiges, umweltverträgliches Harz zu entwickeln, das zur Imprägnierung von Filterpapieren ebenso wie zur Glasgewebeverstärkung geeignet ist und das mit einfachen Mitteln wie Sprühen, Tauchen, Überziehen oder Walzenauftrag aufgebracht werden kann.

Aufgabe der Erfindung war es auch, ein Harz zur Verfügung zu stellen, das bei einer hohen Reaktivität zu den verschiedensten Faserstoffen, Vliesen und gewebten Materialien eine hohe Haft-, Binde- und Benetzungsfähigkeit aufweist, nach dem Trocknen und Aushärten eine hohe Flexibilität besitzt und diese auch bei Beanspruchung durch hohe Temperaturen beibehält.

Die Lösung der Aufgabe erfolgt durch Harzgemische gemäß der Ansprüche 1 bis 5. Die erfindungsgemäßen Harze können gemäß der Ansprüche 6 und 7

zur Imprägnieren von Papieren, wie z. B. Filterpapieren oder von Glasgeweben verwendet werden.

Überraschenderweise wurde gefunden, daß durch das Vermischen von Phenolresolen, Phenolnovolaken und langkettigen Epoxidharzen Harzgemische erhalten werden, deren Reaktivität um etwa 20 % höher liegt als üblicherweise verwendete Harze. Gleichzeitig weisen dieausgehärteten Harzfilme bei Verringerung der Monomeranteile und niedermolekularen flüchtigen Verbindungen in Form von Phenol und Phenolalkoholen höhere Flexibilitäten und Festigkeitswerte durch eine erhöhte Zähelastizität auf.

Durch die Reduzierung der flüchtigen Verbindungen wird die Feuchtigkeitsempfindlichkeit und die Geruchsintensität der vorgetrockneten Harzfilme deutlich verringert.

Erfindungsgemäße Harzsysteme enthalten Phenol- und Epoxidharze im Gewichtsverhältnis von 95:5 bis 20:80, vorzugsweise werden solche mit einem Verhältnis von 90:10 bis 30:70 verwendet, wobei als Phenolharze alle im sauren Medium kondensierten Novolake auf Basis von Phenolen, Kresolen, Bisphenolen mit einem molaren Phenol: Formaldehyd-Verhältnis von 1:0,2 bis 1:0,8 und einem freien Phenolgehalt von < 0,5 % oder basisch kondensierte Resole mit einem molaren Phenol-Formaldehydverhältnis von 1:1 bis 1:3, vorzugsweise 1:1,6 bis 1:2,7 und einem freien Phenolgehalt < 1 % eingesetzt werden können. Die beiden Phenolharztypen können dabei einzeln oder im Gemisch im Verhältnis von 10 : 90 bis 90 : 10 mit einem geeigneten Epoxidharz vermischt oder umgesetzt werden.

Als Epoxidharze kommen Umsetzungsprodukte oder Gemische von Bisphenol A- und Bisphenol F-Diglycidylethern mit polymeren Fettsäuren in Frage, wobei Bisphenol A und Bisphenol F mit allen Verbindungen verethert sein können, die mindestens eine Epoxidgruppe enthalten. Hierzu zählen auch alle im "Handbook of Epoxy Resins (Lee, H.; Neville K.: Mc Graw Hill Book Company, New York, 1967) genannten Epoxidverbindungen, wie z. B. Glycidyl-ether, -thioether, -amine, -polyamine oder -ester.

Zur Herstellung des erfindungsgemäßen Harzgemischs werden Epoxidharze verwendet werden, die durch Vermischen oder Verestern mit polymeren Fettsäuren im molaren Verhältnis von 3:1 bis 1:3 hergestellt werden und ein Epoxidäquivalent von 170 bis 1200 g/val besitzen.

Als polymere Fettsäuren eigenen sich ungesättigte dimere oder trimere Fettsäuren, die durch Reaktion an der ethylenischen Bindung miteinander verknüpft werden. Als solche eignen sich aber auch Umsetzungsprodukte von Diolen oder Polyglykolen mit Dicarbonsäuren oder Monocarbonsäuren bzw. Fettsäuren, wobei als Diole aliphatische, verzweigte oder unverzweigte Dihydroxyverbindungen mit benachbarten oder getrennten bzw. endständigen OH-Gruppen und einer Kohlenstoffzahl von 2 bis 20 umgesetzt werden können. Insbesondere werden Butandiol oder Polybutylglykol mit den Carbonsäuren zu den polymeren Fettsäuren umgesetzt.

Zur Umsetzung geeignete Dicarbonsäuren sind solche mit 3 bis 18 C-Atomen, insbesondere solche mit 4 bis 16 C-Atomen, wie z.B. Fumarsäure, Adipin- oder Sebacinsäure. Als Monocarbonsäuren bzw. Fettsäuren können gesättigte oder ungesättige, verzweigte oder unverzweigte Carbonsäuren mit einem aliphatischen Rest mit 3 bis 60 C-Atomen, insbesondere solche mit einer Kettenlänge von 9 bis 54 C-Atomen, zur Herstellung der erfindungsgemäßen polymeren Fettsäuren verwendet werden. Vorzugsweise werden natürliche Fettsäuren, die durch Esterhydrolyse aus Ölen wie Leinöl, Tallöl oder Ricinusöl gewonnen werden, oder Ölsäure, Stearinsäure oder ähnliche mit den oben genannten Dihydroxyverbindungen umgesetzt. Beispiele für kurzkettige Monocarbonsäuren sind Propionsäure, Acrylsäure, Methacrylsäure oder Vinylessigsäure.

Die erfindungsgemäßen Harze können je nach Verwendung als verdünnte Harzlösungen einen Feststoffgehalt von etwa 25 bis 80 % enthalten. Als Verdünnungsmittel können Alkohole, wie Methanol, Ethanol, Butanol, Ketone als da sind Aceton, Methylethylketon, Methylisobutylketon oder Ester, wie z. B. Ethylacetet, Butylacetet dienen. Es können aber auch Mischungen dieser Verdünnungsmittel verwendet werden.

Vorzugsweise werden die Harzlösungen mit niedrigeren Alkoholen, wie Methanol und Ethanol, und niedrigeren Alkanonen, wie Aceton und Methylethylketon verdünnt, wobei "niedrigere" bedeutet, daß es sich dabei um solche mit weniger als sieben C-Atomen pro Molekül handelt. Auch aromatische und aliphatische, einschließlich cycloaliphatische Lösungs- bzw. Verdünnungsmittel können, je nach Einsatzgebiet des Harzgemischs verwendet werden. Dazu gehören Toluol, Xylol, Methylglykol, Ethylglykol 1-Methoxypropanol-2 Außerdem können in dem Gemisch maximal 0,5 bis 5 % Wasser enthalten sein.

Zur Imprägnierung von Filterpapieren, die außer Cellulosefasern einen gewissen Anteil geeigneten synthetischen Fasermaterials enthalten können, wird das Harzgemisch derart mit einem geeigneten Lösungsmittel verdünnt, vorzugsweise mit Methanol, Aceton oder deren Gemisch, daß ein Imprägnierharz mit einem Feststoffgehalt von 10 bis 30 % entsteht.

Diese Harzlösung kann durch Sprühen, Tauchen oder ]berziehen auf das Filterpapier gebracht werden. ]blicherweise wird das Filterpapier in Form einer Bahn über ein Walzenauftragswerk geführt, wo die Bahn mit der Harzlösung getränkt wird. Die nasse, imprägnierte Bahn wird durch einen Trockenkanal geführt, wo die flüchtigen, niedrig siedenden Lösungsmittel verdampfen und möglichst einer Rückgewinnung zugeführt werden. Die Trocknung der Bahnen erfolgt bei Temperaturen zwischen 80 und 180 °C, und zwar derart, daß noch keine Aushärtung der Imprägnierharze erfolgt. Bei Verwendung der erfindungsgemäßen Harzgemische zeigt sich, daß bereits das noch nicht ausgehärtete Papier eine um 20 bis 30 % höhere Festigkeit aufweist, die bei der Konfektionierung eine höhere Beanspruchung der Papiere erlaubt, wie sie z. B. beim Plissieren, Rillieren und Prägen durch Erhöhung der Durchlaufgeschwindigkeit vorkommen kann.

Auf Grund dieser höheren Festigkeit, die sich auch im ausgehärteten Zustand fortsetzt, besteht auch die Möglichkeit, den Gehalt der Harzmischung im Papier um 10 bis 20 % zu reduzieren, um übliche Festigkeiten einzuhalten.

Weitere Vorteile der erfindungsgemäßen Harze sind, daß das Aushärten bei niedrigeren Temperaturen als bisher erfolgen kann, und zwar bei 100 bis 160 °C, vorzugsweise bei 120 bis 140 °C, gegenüber sonst üblichen 160 bis 200 °C. Dabei werden Filterpapiere mit erhöhter Flexibilität erhalten. Diese Flexibilität bleibt auch erhalten, wenn die Papiere in Gegenwart von Flüssigkeiten hohen Temperaturen bis zu 160 °C ausgesetzt werden, wie dieses z. B. bei Ölfiltern oder oft bei Filtrationen chemischer Reaktionenslösungen der Fall ist.

Vorteilhaft ist auch, daß während des Aushärtens so gut wie keine geruchsintensiven und gesundheitsschädlichen Spaltprodukte freigesetzt werden.

Da die erfindungsgemäßen Harzgemische eine hohe Affinität bzw. Haftfähigkeit sowohl zu organischen Fasern als auch zu anorganischen Fasern und Materialien, wie z. B. Glasfasern und Sand aufweisen, können sie aufgrund ihres Eigenschaftsprofils in hervorragender Weise auch verwendet werden, um Schleifscheiben, Trenn- und Schruppscheiben, Reibbeläge, technische und dekorative Laminate, Glasgewebeverstärkungen und Einbrennlacke daraus herzustellen.

Je nach Verwendung können hierzu die Anteile der einzelnen Harzkomponenten variiert werden und durch Zugabe eines der oben genannten Verdünnungsmittel der Feststoffgehalt eingestellt werden.

Zur Herstellung von Glasgewebeprepregs, die zur Verstärkung vom Trenn- bzw. Schruppscheiben dienen, empfiehlt sich ein Harzgemisch mit 30 - 70 Teilen Novolak und 70 - 30 Teilen Resol. 30 - 70 Teile eines derartigen Gemisches werden mit 70 - 30 Teilen eines Gemisches aus Epoxidharz und polymerer Fettsäure bzw. 70 - 30 Teilen eines Epoxidharz-Umsetzungsproduktes mit polymeren Fettsäuren eingesetzt. 50 bis 80 Teile des erfindungsgemäßen Harzgemisches werden mit 20 bis 50 Teilen Aceton oder Methanol als Verdünnungsmittel eingesetzt. Mit einem solchen Harzgemisch unter Zusatz von tertiären Aminen, wie z. B. N,N-Dimethylbenzylamin, o-(N,N-Dimethylaminomethyl-phenol, 2,4,6-Tris-(N,N-dimethylaminomethyl)-phenol oder Imidazolen, wie z. B. 2-Methylimidazol, Phenylimidazol, 2-Ethyl-4-Methylimidazol im ersten

4

Schritt hergestellte Prepregs zeigen eine hohe Elastizität, sind feuchtigkeitsunempfindlich, klebfrei, sind bis zu 6 Monate lagerfähig und zeigen so gut wie kein Verspröden. Sie lassen sich daher in einfacher Weise ohne Trennfolienzwischenlage über längere Zeit lagern, anschließend gut verarbeiten und ohne Abplatzen von Harzteilen stanzen.

**BEISPIELE**:

Beispiel 1

94 kg Phenol werden mit 940 g Oxalsäure versetzt und auf ca. 100 °C erhitzt. Unter Rühren und Rückfluß werden über 2 h verteilt 46,70 kg 45 %-iges Formalin zugegeben. Nach Beendigung der Zugabe wird die Reaktionsmischung unter Rückfluß für 2 weitere Stunden erhitzt und danach durch Destillation von leichtsiedenden Bestandteilen (Wasser, Phenol) befreit. Anschließend wird der verbleibenden klaren Harzschmelze vorsichtig 58,2 kg Methanol zugefügt und eine klare Lösung hergestellt. Die Kenndaten der resultierenden Harzlösung zeigt Tabelle 1.

Beispiel 2

Es wird eine Harzlösung wie in Beispiel 1 hergestellt, zu der anschließend noch 1,6 kg Dicyandiamid zugegeben werden. Danach wird so lange unter Sieden gerührt, bis eine klare Lösung erhalten wird.

Beispiel 3 (Vergleichsbeispiel Novolak)

Zur klaren Lösung von Beispiel 2 werden unter Rühren bei Raumtemperatur 9,7 kg Hexamethylentetramin zugesetzt und eine klare Lösung hergestellt.

Beispiel 4

32,9 kg Phenol werden mit 0,9 kg Triethylamin versetzt und auf 80 bis 85 °C erhitzt. Unter Rühren werden bei dieser Temperatur 60,5 kg Formalin, (45 %-ig), über 3 h verteilt zugegeben. Nach Beendigung der Zugabe wird die Reaktion noch 2 h bei einer Temperatur von 85 °C weitergeführt und danach durch Destillation von leichtsiedenden Bestandteilen (Wasser, Phenol) befreit. Anschließend werden in das heiße Harz 23,1 kg Methanol portionsweise unter Rückfluß zugeführt. In die heiße methanolische Harzlösung werden 1,8 kg Dicyandiamid zugegeben und bis zur vollständigen Lösung unter Kühlen gerührt.

Beispiel 5

181 g eines käuflichen Diglycidylethers des Bisphenol A, wie z. B. Rütapox® 0164, werden mit 86 g einer dimeren Fettsäure (Pripol 1013) mit einem Dimersäuregehalt von 95 % mit einer Säurezahl von 196 mg KOH/g und einer Verseifungszahl von 201 mg KOH/g in einem Reaktionskolben gemischt. Nach Zugabe von 0,7 g Benzyldimethylamin (BDMA) wird unter Stickstoffatmosphäre langsam auf 140 °C aufgeheizt. Nach Beendigung der leicht exothermen Reaktion wird bei ca. 150 °C bis zu einem Epoxidäquivalent der Mischung von 500 bis 550 g/Äquiv. nachreagiert. Anschließend werden ca. 180 g Aceton unter Rückfluß zugegeben und auf Raumtemperatur abgekühlt.

Beispiel 6

Die in Beispiel 5 angegebenen Mischungen aus Epoxidharz und dimerer Fettsäure (Pripol 1013) wird mit 180 g Aceton gemischt und so lange gerührt, bis eine klare Lösung entsteht. Das Epoxidäquivalent der Lösung beträgt 445 g/Äquiv.

Beispiel 7

90,5 g des Epoxidharzes (Rütapox® 0164) werden mit 81,4 g einer dimeren Fettsäure (Pripol 1013) nach dem Vermischen mit 0,7 g BDMA versetzt und unter Rühren und Stickstoffatmosphäre langsam auf 160 °C erhitzt. Das Gemisch wird bei dieser Temperatur gehalten bis ein Epoxidäquivalent von 1070 g/Äquiv. ermittelt wird. Anschließend wird dem Gemisch unter Rückfluß 115 g Aceton zugegeben. Es entsteht eine klare Lösung.

### Beispiel 8

Die im Beispiel 7 angegebenen Rohstoffe werden unter Rühren bei Raumtemperatur gemischt. Die entstandene, klare Lösung hat ein Epoxidäquivalent von 574 g/Äquiv.

Die Erfindung wird durch die nachfolgenden Beispiele erläutert:

Die mechanischen Gebrauchseigenschaften von imprägnierten Filterpapieren können durch die Bestimmung des Berstdruckes an imprägnierten und getrockneten Filterpapieren im vorreagierten und im ausgehärteten Zustand nach Klimalagerung bei Raumtemperatur und 50 % rel. Luftfeuchtigkeit bestimmt werden. Die Imprägnierung, Vorreaktion und Trocknung der Papiere erfolgt gleichbleibend auf einer Vits-Horizontal-Laborimprägnieranlage. Die Länge des Trockners beträgt 1,2 m. Die auf einen Harzgehalt (nach DIN 16916-02-HI) von 18 ± 2 % mit Aceton als Verdünnungsmittel eingestellten Harzlösungen werden in eine Imprägnierwanne gegeben. Als Verdünnungsmittel können zu diesem Zweck auch Aceton/Methanol-Gemische im Verhältnis 1 : 1 bis 1 : 4 verwendet werden. Neben der Bestimmung des Berstdruckes nach DIN 53141 wird ebenso der Gehalt an freiem Phenol nach DIN 16916-02-L2 bestimmt. Das zur Imprägnierung verwendete Papier weist ein Rohgewicht von 100 bis 105 $g/cm^2$ auf. Es wird gleichmäßig durch das Imprägnierbad und anschließend durch den Trockner geführt. Die Verweilzeit des imprägnierten Papiers beträgt 2 min. bei 110 °C. Der Harzgehalt der vorreagierten und getrockneten Papiere beträgt 20 ± 1 %.

Die weitere Aushärtung des Papiers erfolgt an DIN A5 großen Papierabschnitten in einem Trockenschrank bei 160 °C für 10 min. Neben der Bestimmung des Berstdruckes wird von jedem gehärteten Papier der Gehalt an freiem Phenol nach DIN 16916-02-L2 bestimmt.

### Beispiel 9 (Vergleichsbeispiel Novolak)

Mit der in Beispiel 3 beschriebenen Harzlösung wird ein Filterpapier in der zuvor beschriebenen Weise hergestellt und geprüft. Die Eigenschaften sind in Tabelle 2 aufgeführt.

### Beispiel 10 (Vergleichsbeispiel Resol)

Die Herstellung des Imprägnates erfolgt mit der Harzlösung aus Beispiel 4. Die anschließende Imprägnierung und Eigenschaftsprüfung wird in der oben beschriebenen Weise durchgeführt. Die Eigenschaften sind in Tabelle 2 aufgeführt.

### Beispiel 11

90 g einer Lösung aus Beispiel 3 werden mit 10 g einer Lösung aus Beispiel 5 innig vermischt. Aus dieser Mischung wird, wie oben beschrieben, nach Verdünnen mit Aceton ein Imprägnat hergestellt, dessen Eigenschaften in Tabelle 2 aufgeführt sind.

### Beispiel 12

Das gleiche wie in Beispiel 11 beschrieben, wird mit 95 g Harzlösung aus Beispiel 3 und 5 g Harzlösung aus Beispiel 5 wiederholt. Nach dem innigen Vermischen der Harzlösungen wird in beschriebener Weise mit Methanol verdünnt. Mit dieser Lösung behandelte Filter weisen die in Tabelle 2 angegebenen Eigenschaften auf.

### Beispiel 13

90 g Harzlösung aus Beispiel 3 werden mit 10 g des Gemisches aus Beispiel 8 homogenisiert und nach dem Verdünnen mit Aceton zur Imprägnierung von Filterpapieren, wie oben beschrieben, verwendet. Die Eigenschaften der erhaltenen Produkte sind in Tabelle 2 aufgeführt.

### Beispiel 14

Das gleiche, wie in Beispiel 13 beschrieben, wird mit 95 g Harzlösung aus Beispiel 3 und 5 g Harzlösung aus Beispiel 7 durchgeführt. Die Eigenschaften der imprägnierten Filterpapiere sind in Tabelle 2 aufgeführt.

Beispiel 15

30 g Harzlösung aus Versuchsbeispiel 1 werden mit 70 g Harzlösung aus Beispiel 5 und einem Zusatz von 1,5 g einer 10 %-igen methanolischen Lösung 2-Methylimidazol gemischt und zur Imprägnierung, wie oben beschrieben, mit Aceton verdünnt. Die Eigenschaftswerte des Imprägnates sind in Tabelle 2 aufgeführt.

Beispiel 16

40 g einer Harzlösung aus Beispiel 1 werden mit 60 g einer Harzlösung aus Beispiel 5 und 1,5 g einer 10 %-ige methanolischen Lösung von 2-Methylimidazol vermischt.

Die Messung der B-Zeit bei 130 °C nach DIN 16916-02-C2 für dieses Gemisch ergibt einen Wert von 5 min. 5 sek.

Beispiel 17

30 g einer Harzlösung aus Beispiel 2 und 70 g einer Harzlösung aus Beispiel 5 werden mit 1,5 g einer 10 %-ige methanolischen Lösung von 2-Methylimidazol vermischt.

Die Messung der B-Zeit bei 130 °C nach DIN 16916-02-C2 für dieses Gemisch ergibt einen Wert von 4 min 20 sek.

Beispiel 18

40 g einer Harzlösung aus Beispiel 1 und 60 g einer Harzlösung aus Beispiel 8 werden mit 1,5 g einer 10 %-ige methanolischen Lösung von 2-Methylimidazol vermischt.

Die Messung der B-Zeit bei 130 °C nach DIN 16916-02-C2 für dieses Gemisch ergibt einen Wert von 5 min. 10 sek.

Beispiel 19

Entgegen den üblichen Aushärtebedingungen wird das mit dem in Beispiel 16 aufgeführte Imprägnat 10 min. bei 140 °C gehärtet. Der gemessene Berstdruck nach DIN 53141 beträgt 350 kPa.

Beispiel 20

Die Harzmischung aus Beispiel 16 wird in der Weise mit Aceton verdünnt, daß ein Papier mit einem Harzgehalt von 15 % erhalten wird. Nach einer Vorreaktion innerhalb von 2 min. bei 110 °C wird ein Berstdruck von 180 kPa und nach der weiteren Aushärtung innerhalb von 10 min bei 160 °C wird ein Berstdruck von 340 kPa gemessen.

Beispiel 21

Ein für Schleifscheibenverstärkungen übliches Glasgewebe (Interglas 93133) wird mit der Harzmischung aus Beispiel 16 imprägniert und 2 min. im Trockenschrank bie 110 °C getrocknet. Das klebfreie flexible Gewebe weist einen Harzgehalt von 33 % auf. Bei Lagerung des Gewebes bei Raumtemperatur und 90 bis 95 % rel. Luftfeuchte bleibt der Prepreg klebfrei. Der Gehalt an freiem Phenol beträgt 0,1 % (DIN 16916-02-L2). Der Prepreg ist nach 6 monatiger Lagerung bei Raumtemperatur und 50 %-iger rel. Luftfeuchte noch flexibel.

Beispiel 22 (Vergleichsbeispiel)

Unter gleichen Bedingungen, wie im Beispiel 21 beschrieben, wird ein übliches Phenolresolnovolakgemisch mit einem Harzgehalt von 65 %, einer Viskosität von 450 mPa•s bei 20 °C, einer B-Zeit bei 130 °C von 8 min. und einem Gehalt an freiem Phenol von 8 % auf das gleiche Glasgewebe aufgebracht. Nach dem Trocknen ist das Gewebe trocken und flexibel. Nach 24 stündiger Lagerung bei Raumtemperatur und 90 bis 95 % rel. Luftfeuchte wird der Prepreg leicht klebrig. Der Harzgehalt des Prepregs ist 30,9 %. Der Gehalt an freiem Phenol wird mit 1,6 % ermittelt. Der Prepreg ist nach 6 monatiger Lagerung bei Raumtemperatur und 50 %-iger Luftfeuchte nicht mehr flexibel sondern brüchig. Beim Biegen des Gewebes

7

platzen Harzpartikel ab.

**T A B E L L E N**

TABELLE 1

| | Bsp. 1 | Bsp. 2 | Bsp. 3 | Bsp. 4 |
|---|---|---|---|---|
| Nichtflüchtige Anteile bei 135 °C n. DIN 16916-02-H1 | 60,8 % | 61,5 % | 65,7 % | 60,0 % |
| B-Zeit bei 130 °C n. DIN 16916-02-C2 | n. a. | n. a. | 11 min. 20 sek. | 3 min. |
| Viskosität bei 20 °C n. DIN 53015 | 99 mPa·s | 110 mPa·s | 311 mPa·s | 267 mPa·s |
| Freies Phenol n. DIN 16916-02-L2 | 0,4 % | 0,4 % | 0,3 % | 1,0 % |

8

## Patentansprüche

1. Harzgemisch zur Imprägnierung und/oder Beschichtung flächiger Gebilde, **dadurch gekennzeichnet,** daß es aus

TABELLE 2

| Imprägnate | Nr.9 | Nr.10 | Nr.11 | Nr.12 | Nr.13 | Nr.14 | Nr.15 | Nr.16 | Nr.17 | Nr.18 |
|---|---|---|---|---|---|---|---|---|---|---|
| Berstdruck DIN 53141 n. Vorreaktion 2' 110 °C (kPa) | 150 | 150 | 170 | 150 | 140 | 150 | 230 | 270 | 250 | 260 |
| n. Aushärtung 10' 160 °C (kPa) | 270 | 250 | 400 | 300 | 290 | 350 | 440 | 440 | 430 | 430 |
| Fr. Phenol DIN 16916-02-L2 (%) | 0,08 | 0,17 | 0,05 | 0,06 | 0,05 | 0,05 | 0,02 | 0,02 | 0,02 | 0,02 |

a) Phenolnovolak, hergestellt durch saure Kondensation von Phenolen und Formaldehyd im molaren Verhältnis von 1:0,2 bis 1:0,8 und/oder

b) Phenolresolen, hergestellt durch basische Kondensation von Phenolen und Formaldehyd im molaren Verhältnissen von 1:1 bis 1:3 und

c) Epoxidharzen, bei denen es sich um Umsetzungsprodukte bzw. Gemische eines Epoxidharzes mit einem Epoxidäquivalent von 170-1.200 mit polymeren Fettsäuren im Verhältnis von 3:1-1:3 handelt,

besteht,

wobei das Verhältnis der Gesamtmenge Phenolharz zu Epoxidharz 95:5 bis 20:80, vorzugsweise 90:10 bis 30:70, beträgt, und

d) der Feststoffgehalt des Harzgemisches 10 bis 80 % beträgt.

2. Harzgemisch gemäß Anspruch 1, **dadurch gekennzeichnet**, daß der freie Phenolgehalt des Phenolnovolaks < 0,5 % und der des Phenolresols < 1 % beträgt.

3. Harzgemisch nach den Ansprüchen 1-2, **dadurch gekennzeichnet**, daß es ein Gemisch aus Novolaken und Resolen im Gewichtsverhältnis 95:5 bis 5:95, insbesondere 70:30 bis 30:70, enthält.

4. Harzgemisch nach den Ansprüchen 1-3, **dadurch gekennzeichnet**, daß es einen Feststoffgehalt von 25 bis 80 % besitzt.

5. Harzgemisch nach den Ansprüchen 1-4, **dadurch gekennzeichnet**, daß der Feststoffgehalt durch Zugabe eines Lösungsmittels aus der Gruppe Methanol, Ethanol, Butanol, Aceton, Methylethylketon, Methylisobutylketon, Ethylacetat und Butylacetat erzielt wird.

6. Verwendung eines Harzgemisches gemäß der Ansprüche 1-5 zur Imprägnierung von Papieren z.B. Filterpapieren.

7. Verwendung eines Harzgemisches gemäß der Ansprüche 1-5 zur Imprägnierung bzw. Beschichtung von Glasgeweben.

## Claims

1. A resin mixture for impregnating and/or coating planar bodies, **characterized in that** it comprises:

a) phenol novolak, produced by acidic condensation of phenols and formaldehyde in a molar ratio of 1 : 0.2 to 1 : 0.8, and/or

b) phenol resols, produced by basic condensation of phenols and formaldehyde in molar ratios of 1 : 1 to 1 : 3; and

c) epoxide resins, which are conversion products or mixtures of an epoxide resin with an epoxide equivalent from 170 - 1,200 with polymeric fatty acids in a ratio of 3 : 1 to 1 : 3;

the ratio of the overall amount of phenolic resin to epoxide resin being 95 : 5 to 20 : 80, preferably 90 : 10 to 30 : 70, and

d) the solid-substance content of the resin mixture being 10 to 80%.

2. A resin mixture in accordance with claim 1, **characterised in that** the free phenol content of the phenol novolak is < 0.5% and that of the phenol resol is < 1%.

3. A resin mixture in accordance with claims 1 to 2, **characterised in that** it contains a mixture of novolaks and resols in a weight ratio of 95 : 5 to 5 : 95, more particularly 70 : 30 to 30 : 70.

4. A resin mixture in accordance with claims 1 to 3, **characterised in that** is has a solid-substance content of 25 to 80%.

5. A resin mixture in accordance with claims 1 to 4, **characterised in that** the solid-substance content is achieved by adding a solvent from the group: methanol, ethanol, butanol, acetone, methyl ethyl ketone, methyl isobutyl ketone, ethyl acetate and butyl acetate.

6. Use of a resin mixture in accordance with claims 1 to 5 for impregnating papers, e.g. filter papers.

**7.** Use of a resin mixture in accordance with claims 1 to 5 for impregnating or coating glass fabrics.

**Revendications**

**1.** Mélange de résines pour l'imprégnation et/ou le revêtement de tissu plat, caractérisé en ce qu'il consiste en

a) phénolnovolaque préparé par condensation acide de phénol et de formaldéhyde dans un rapport molaire de 1 : 0,2 à 1 : 0,8 et/ou

b) phénolrésols préparés par condensation basique de phénol et formaldéhyde dans des rapports molaires de 1 : 1 à 1 : 3, et

c) résines époxydes pour lesquelles il s'agit de produits de conversion ou de mélange d'une résine époxyde avec un équivalent époxyde de 170-1200 avec des acides gras polymères dans un rapport 3 : 1 - 1 : 3

moyennant quoi le rapport de la quantité totale de résine phénolique et de résine époxyde est de 95:5 à 20:80, de préférence 90:10 à 30:70, et

d) la teneur en matières solides du mélange de résines est de 10 à 80 %.

**2.** Mélange de résines selon la revendication 1, caractérisé en ce que la teneur en phénol libre du phénolnovolaque est < 0,5 % et le phénolrésol < 1 %.

**3.** Mélange de résines selon les revendications 1-2, caractérisé en ce qu'il contient un mélange de novolaque et de résol dans un rapport pondéral 95:5 à 5:95, en particulier 70:30 à 30:70.

**4.** Mélange de résine selon les revendications 1-3, caractérisé en ce qu'il possède une teneur en matières solides de 25 à 80 %.

**5.** Mélange de résine selon les revendications 1-4, caractérisé en ce que la teneur en matières solides est obtenue par addition d'un solvant choisi dans le groupe méthanol, éthanol, butanol, acétone, méthyléthylcétone, méthylisobutylcétone, éthylacétate et butylacétate.

**6.** Utilisation d'un mélange de résines selon les revendications 1-5 pour l'imprégnation de papiers, par exemple de papiers filtres.

**7.** Utilisation d'un mélange de résines selon les revendications 1-5 pour l'imprégnation ou le revêtement de tissu de verre.